(19)

**Europäisches Patentamt**
**European Patent Office**
**Office européen des brevets**

(11) **EP 1 640 462 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(51) Int Cl.:
**C21C 5/52** (2006.01)

(21) Anmeldenummer: **05019269.9**

(22) Anmeldetag: **05.09.2005**

(54) **Verfahren und Einrichtung zum Herstellen von flüssigem Stahl**

Method and device for the production of molten steel

Procédé et dispositif pour la production d'acier en fusion

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.09.2004 DE 102004046727**

(43) Veröffentlichungstag der Anmeldung:
**29.03.2006 Patentblatt 2006/13**

(73) Patentinhaber: **SMS Demag AG**
**40237 Düsseldorf (DE)**

(72) Erfinder:
- **Uebber, Norbert**
  **40764 Langenfeld (DE)**
- **Weischedel, Walter, Dr.**
  **40670 Meerbusch (DE)**
- **Falkenreck, Udo**
  **44797 Bochum (DE)**
- **Monheim, Peter, Dr.**
  **46284 Dorsten (DE)**
- **Heinrich, Peter, Dr.**
  **47608 Geldern (DE)**

(74) Vertreter: **Klüppel, Walter et al**
**Patentanwälte Hemmerich & Kollegen**
**Hammerstrasse 2**
**57072 Siegen (DE)**

(56) Entgegenhaltungen:
**DE-A1- 10 205 660**

- **LEMKE S ET AL: "TAILORED SOLUTIONS FOR THE PRODUCTION OF QUALITY STEEL" August 2001 (2001-08), MPT. METALLURGICAL PLANT AND PLANT AND TECHNOLOGY INTERNATIONAL, VERLAG STAHLEISEN, DUESSELDORF, DE, PAGE(S) 72-74,76,78,80,82,84,86 , XP009010639 ISSN: 0935-7254 * das ganze Dokument * * Abbildung 6 ***
- **MEIERLING P ET AL: "LEISTUNGSSTEIGERUNG BEI DER ELEKTROSTAHLERZEUGUNG" STAHL UND EISEN, VERLAG STAHLEISEN, DUSSELDORF, DE, Bd. 114, Nr. 6, 13. Juni 1994 (1994-06-13), Seiten 117-121, XP000448201 ISSN: 0340-4803**

**Beschreibung**

Die Erfindung betrifft ein Verfahren und eine Einrichtung zum Herstellen von flüssigem Stahl in einem Elektrolichtbogen- oder Induktionsofen, in dem die Schmelze behandelt, in eine Transportpfanne abgestochen, transportiert und in einer Sekundärmetallurgie die Temperatur und die Analyse der Stahlgüte zum Vergießen eingestellt werden.

Ein derartiges Verfahren ist teilweise aus der DE 102 05 660 A1 bekannt. Dabei werden als Einsatzmaterialien Schrott, Eisenschwamm oder dergleichen in dem oberen Teil eines vorgeordneten Einschmelzgefäßes vorgewärmt und anschließend in einem unteren Teil des Einschmelzgefäßes mit den fossilen Brennstoffen erschmolzen. Die Schmelze wird kontinuierlich in ein Überhitzungsgefäß, einen Elektrolichtbogenofen, abgeleitet, in dem die gewünschte Stahlgüte eingestellt wird, wobei in das Einschmelzgefäß von außen Gase zur Nachverbrennung der Prozessgase eingeführt werden. Die Weiterentwicklung besteht bekannterweise darin, dass für die Prozessgase verschiedene Nachverbrennungsebenen und ein in die Materialsäule hineinragender Innenschacht vorgeschlagen werden.

Derartige Stahl-Erschmelzungsverfahren dienen der Bereitstellung von Schmelzenchargen, wie bspw. beim Stahl-Stranggießen zu Brammen unterschiedlicher Dicke bis zu Dünnsträngen im Bereich von 40 - 150 mm Dicke. Nach Abstich der Schmelze aus einem Elektrolichtbogenofen als Überhitzungsgefäß ist aufgrund der geringen, im Gefäß verbleibenden Restschmelze eine erheblich reduzierte Energiezufuhr oder ein Abschalten der Energiezufuhr notwendig, um ein zu hohes Überhitzen der Restschmelze und einen übermäßigen Verschleiß des Herdbodens zu vermeiden. Nachteilig ist ein geringer Wirkungsgrad der Energieübertragung des Lichtbogens an die Schmelze wegen schlechterer Schäumbarkeit der Schlacke bei höheren Temperaturen. Damit ist eine schwankende Nutzung der elektrischen Energie verbunden. Nachteilig ist auch, dass der Elektrolichtbogenofen und ein Pfannenofen räumlich erheblich voneinander entfernt sind, so dass beim Transportieren entsprechend hohe Energieverluste auftreten. Für den Elektrolichtbogenofen und den Pfannenofen muss eine separate elektrische Energiezufuhr vorgesehen werden.

Dokument LEMKE S ET AL: "TAILORED SOLUTIONS FOR THE PRODUCTION OF QUALITY STEEL" August 2001, MPT. METALLURGICAL PLANT AND PLANT AND TECHNOLOGY INTERNATIONAL, VERLAG STAHLEISEN, DUESSELDORF, DE, SEITEN 72-74,76,78,80,82,84,86 offenbart ein Verfahren zum Herstellen von flüssigem Stahl, in einer zwei Gefäße aufweisenden Schmelzeinrichtung zur Versorgung einer Stahlgiessanlage, wobei in beiden Gefäßen wechselweise ein Elektrolichtbogenofenprozess und ein Blasprozess betrieben wird. Nach dem Abstechen werden die sekundärmetallurgischen Prozesse wechselweise in zwei Pfannenöfen ausgeführt.

Der Erfindung liegt die Aufgabe zugrunde, den bisherigen Verlust an elektrischer Energie im Elektrolichtbogen- oder Induktionsofen und im Pfannenofen durch übermäßiges Überhitzen im Elektrolichtbogen- oder Induktionsofen und durch Verluste bei der abhängigen Energiezufuhr im Pfannenofen erheblich zu reduzieren.

Die gestellte Aufgabe wird erfindungsgemäß dadurch gelöst, dass eine Nutzung einer gemeinsamen Energiequelle mit zugeführter Energie zum Überhitzen der Schmelze in dem Elektrolichtbogen- oder Induktionsofen und zur Temperatureinstellung in einem Pfannenofen vorgenommen wird, dass die für das selbständige Einschmelzgefäß vorgesehene Schmelzleistung L und die Fläche A des Querschnitts die Bedingung. L [MW] / A [m$^2$] > 2,3 MW/m$^2$ erfüllt, dass das Verhältnis der im Elektrolichtbogen- oder Induktionsofen angebotenen elektrischen Leistung $L_{el}$ zu der Leistung aus fossiler Energie im Einschmelzgefäß die Bedingung $L_{el}$ / $L_{fossil} \geq$ 0,18 erfüllt und dass das Verhältnis der Oxidationsstoffe im Elektrolichtbogen- oder Induktionsofen zu den fossilen Energieträgern im Einschmelzgefäß zwischen 0,6 und 1,2 eingestellt wird. Dadurch findet eine gleichmäßige und effiziente Energieausnutzung beim Überhitzen einer Schmelze im Elektrolichtbogen- oder Induktionsofen in Kombination mit einer metallurgischen Arbeit an der Schmelze statt, so dass erheblich Energie eingespart wird. Außerdem wird durch eine gleichmäßige Nutzung an elektrischer Energie der spezifische Elektrodenverbrauch gesenkt. Die schwankende Nutzung der elektrischen Energien wird vermieden. Gleichzeitig wird die Nutzung einer einheitlichen Energiequelle für Elektrolichtbogen- oder Induktionsofen und Pfannenofen ermöglicht. Der Hauptvorteil dieses Verfahrens ist die neue Funktion, die nach dem Schmelzen erforderliche Überhitzungs- und metallurgische Arbeit eng zu verknüpfen und effizient in optimierten Gefäßen durchzuführen. Der Elektrolichtbogen- oder Induktionsofen ist durch seine große Schmelzbadoberfläche optimiert für einen gleichmäßigen Wärmeübergang an die Schmelze, aber weniger geeignet für metallurgische Behandlungen mit den notwendigen Verfahrensmaßnahmen, wie bspw. Spülen, Baddurchmischen u. dgl. Das Pfannenofen-Gefäß hingegen ist mit seinem kompakten Schmelzen-Volumen besser geeignet für metallurgische Behandlungen, wie bspw. Spülen u. dgl..

Eine Ausführungsform besteht daher darin, dass die elektrische Energie während des Überhitzens der Schmelze bis zum Abstechen in die Transportpfanne zugeführt wird, nach dem Positionieren der Transportpfanne im Pfannenofen fortgesetzt und nach der Temperatureinstellung in der Pfanne und bei hinreichend hohem Füllstand im Elektrolichtbogen- oder Induktionsofen wieder auf den Elektrolichtbogen- oder Induktionsofen zum erneuten Überhitzen umgeschaltet wird.

Eine Einrichtung zum Herstellen von flüssigem Stahl, mit einem Elektrolichtbogen- oder Induktionsofen, einer Transport- bzw. Behandlungspfanne, einer Schwenkeinrichtung für eine Elektrodeneinheit, sowie mit einem Pfannenofen wird für die Lösung der Aufgabe dahingehend ausgebildet, dass zwischen dem Elektrolichtbogen- oder Induktionsofen und einem räumlich im Schwenkbereich der Elektrodeneinheit angeordneten Pfannenofen eine abwechselnd im Überhitzungsgefäß oder im Pfannenofen nutzbare Elektrodeneinheit mit einem schwenkbaren Tragarm, Zuleitungen und einem Transformator angeordnet ist, wobei eine Schienenbahn zumindest zwischen der Abstichposition des Überhitzungsgefäßes und der Heizposition des Pfannenofens verläuft. Dadurch wird eine weitere EnergieErsparnis erzielt, so dass geringere Energieverluste durch den räumlich nahen Elektrolichtbogen- oder Induktionsofen und dem Pfannenofen entstehen.

Eine Ausgestaltung sieht vor, dass die Transportpfanne auf einem Wagen mit heb- und senkbarer Tragplattform angeordnet ist und dass die Halteposition des Wagens auf die ausschwenkbare Elektrodeneinheit abgestimmt ist.

Eine weitere Verbesserung besteht darin, dass an den schwenkbaren Tragarm eine Abdeckvorrichtung für die Elektrodenlöcher im Ofendeckel des Elektrolichtbogen- oder Induktionsofens vorgesehen ist, die mit der Elektrodenbewegung synchronisierte Hub- oder Schwenkbewegungen ausführt. Dadurch kann während der Abschwenkzeit vom Elektrolichtbogen- oder Induktionsofen zum Pfannenofen kein Energieverlust aufgrund der Elektrodenlöcher stattfinden.

In der Zeichnung sind Ausführungsbeispiele der Erfindung dargestellt, die nachstehend näher erläutert werden.

Es zeigen:

Fig. 1 einen senkrechten Schnitt durch die schwenkbare Elektrodeneinheit über dem Elektrolichtbogen- oder Induktionsofen und über dem Pfannenofen,

Fig. 2 den zu Fig. 1 gehörenden Grundriss der Anlage,

Fig. 3A einen senkrechten Schnitt durch die geschwenkte Elektrodeneinheit mit anfahrender Transportpfanne und

Fig. 3B die Elektrodeneinheit während des Überhitzens in dem Pfannenofen.

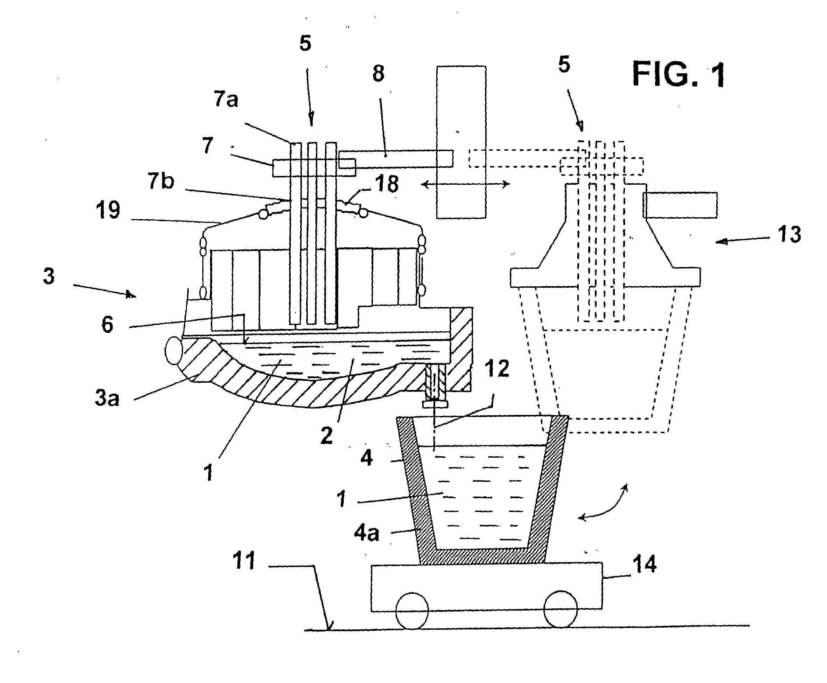

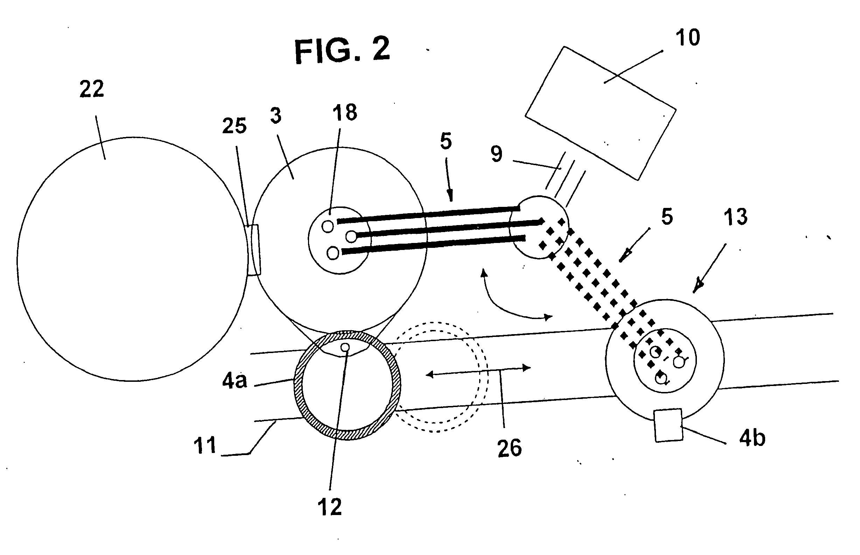

Bei einem solchen Verfahren (Fig. 1 und 2) zum Herstellen von flüssigem Stahl 1, in einem Elektrolichtbogen- oder einem Induktionsofen 3, in dem die Schmelze 2 behandelt, in eine Transportpfanne 4a abgestochen , transportiert und in einer Sekundärmetallurgie unter anderem Temperatur und Analyse der Stahlgüte zum Vergießen eingestellt wird, wobei metallische Einsatzmaterialien (Schrott, Eisenschwamm o.dgl.) in ein in Fig. 2 dargestelltes, selbständiges Einschmelzgefäß 22 mit fossilen Energieträgern (Öl, Gas, Kohle u. dgl.) erschmolzen werden, ist ein ökologisches und ökonomisches Vorgehen dadurch gewährleistet, dass eine Nutzung einer gemeinsamen Energiequelle 5 mit elektrischer Energie zum Überhitzen der Schmelze 2 zuerst in dem Elektrolichtbogen- oder Induktionsofen 3 und später zur Temperatureinstellung in einem Pfannenofen 4b vorgenommen wird und dadurch, dass jeweils eine zeitabhängige Aufteilung der elektrischen Energie nach dem Bedarf für das jeweilige Überhitzen und für die Temperatureinstellung durchgeführt wird.

Die gleichmäßige Form der Energieausnutzung erfolgt dadurch, dass die elektrische Energie während des Überhitzens der Schmelze 2 bis zum Abstechen in eine Transportpfanne 4a zugeführt wird, nach dem Positionieren der Transportpfanne 4a im Pfannenofen 4b fortgesetzt und nach der Temperatureinstellung in der Pfanne 4a und bei hinreichend hohem Füllstand 6 im Elektrolichtbogen- oder Induktionsofen 3 wieder auf das Elektrolichtbogen- oder Induktionsofen 3 zum Überhitzen umgeschaltet wird.

Das Verfahren zum vorausgehenden Stahlherstellen wird außerdem nach gefundenen Regeln durchgeführt, wonach

- die für das selbständige Einschmelzgefäß 22 vorgesehene Schmelzleistung L und die Fläche A des Querschnitts die Bedingung erfüllen:

$$(a) \quad \frac{L\,[\,MW\,]}{A\,[\,m^2\,]} > 2,3\ MW\,/\,m^2$$

- das Verhältnis der im Elektrolichtbogen- oder Induktionsofen 3 angebotenen elektrischen Leistung

- $L_{el}$ zu der Leistung aus fossiler Energie im Einschmelzgefäß 22 die folgende Bedingung erfüllt

$$(b) \quad \frac{L_{el}}{L_{fossil}} \geq 0,18$$

- und das Verhältnis λ der Oxidationsstoffe im Elektrolichtbogen- oder Induktionsofen 3 zu den fossilen Energieträgern im Einschmelzgefäß 22 zwischen 0,6 und 1,2 eingestellt wird.

Um nun die weiteren Verfahrensschritte auszuführen, ist zwischen dem Elektrolichtbogen- oder Induktionsofen 3 und dem räumlich möglichst nahen Pfannenofen 4b eine abwechselnd nutzbare Elektrodeneinheit 7 mit einem schwenkbaren Tragarm 8 und Zuleitungen 9 und einem Transformator 10 (vgl. Fig. 2) angeordnet. Die Schienenbahn 11 für den Wagen 14 verläuft zumindest zwischen der Abstichposition 12 des Elektrolichtbogen- oder Induktionsofen 3 und einer Heizposition 13. Dabei kann die Heizposition 13 durch Schwenken auf einer Kreisbahn des Tragarms 8 mit der gemeinsamen elektrischen Energiequelle 5 in die Heizposition 13 eingestellt werden. Zuerst gelangen die Elektroden 7a durch Elektrodenlöcher 7b im Ofendeckel 19 in eine obere Höhenstellung und damit in eine Schwenkebene und nach dem Schwenken in die gestrichelt dargestellte Heizposition 13. Während des Abstechens der Schmelze 2 oder des flüssigen Stahls 1 sinkt der Füllstand 6 im Unterofen 3a bis auf einen Rest an Schmelze 2 und Schlacke.

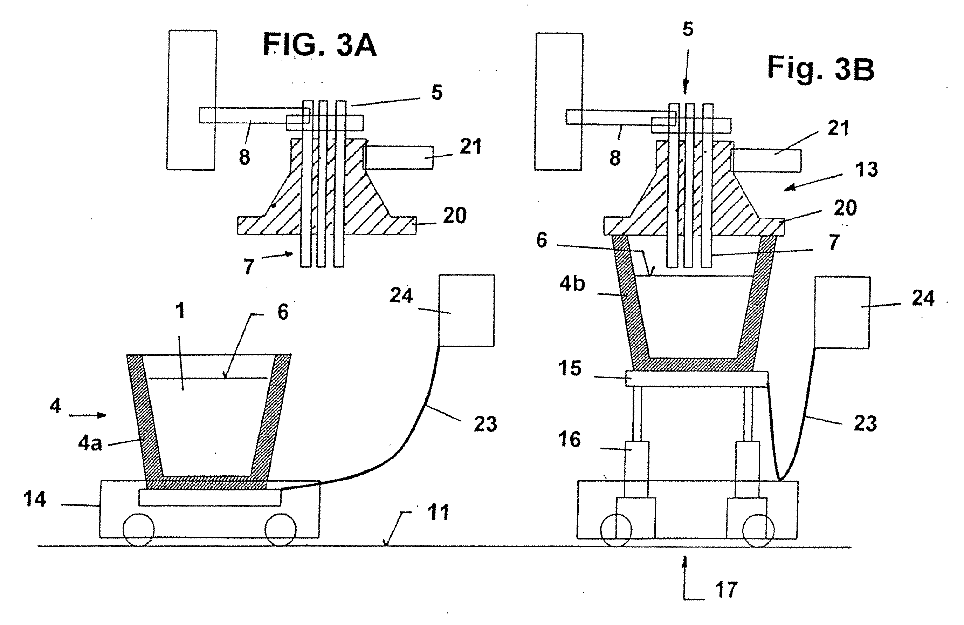

Das Schwenken der gemeinsamen elektrischen Energiequelle 5 ist im Grundriss auch in Fig. 2 dargestellt. Die Schmelze 2 fließt ggfs. kontinuierlich über eine Rinne 25 in den Elektrolichtbogen- oder Induktionsofen 3 und wird nach Überhitzen in der Abstichposition 12 in das Behandlungsgefäß 4 abgestochen, in Pfeilrichtung 26 in die Heizposition 13 des Pfannenofens 4b auf der Schienenbahn 11 gefahren und in die Heizposition 13 angehoben. Im Gegensatz zur Hub- und Schwenkbewegung der gemeinsamen elektrischen Energiequelle 5 in der Abstichposition 12 wird (Fig. 3A und 3B) die Pfanne 4a mittels einer auf hydraulischen Kolben-Zylinder-Einheiten 16 gestützten heb- und senkbaren Tragplattform 15 in die Heizposition 13 geradlinig angehoben. Dabei durchlaufen die Elektroden 7a einen Pfannendeckel 20, der ortsfest an einer Haltevorrichtung 21 befestigt ist.

Die Transportpfanne 4a auf dem Wagen 14 mit der heb- und senkbaren Tragplattform 15 fährt in eine abgestimmte Halteposition 17 des Wagens 14 bezüglich der ausschwenkbaren Elektrodeneinheit 7. An dem Wagen 14 ist eine flexible Prozessgas-Zuführung 23 angeschlossen, die mit einem ortsfesten Ventilstand 24 verbunden ist, wodurch Spülgase jederzeit bis in der Halteposition 17 eingesetzt werden können.

An dem schwenkbaren Tragarm 8 ist außerdem eine Abdeckvorrichtung 18 für die Elektrodenlöcher 7b im Ofendeckel 19 des Elektrolichtbogen- oder Induktionsofen 3 vorgesehen, die mit der Elektrodenbewegung synchronisierte Hub- oder Schwenkbewegungen ausführt (vgl. Fig. 1).

Bezugszeichenliste

1 flüssiger Stahl
2 Schmelze
3 Überhitzungsgefäß (Elektrolichtbogenofen)
3a Unterofen
4 Behandlungsgefäß
4a Transportpfanne

4b Pfannenofen
5 gemeinsame elektrische Energiequelle
6 Füllstand
7 Elektrodeneinheit
7a Elektrode
7b Elektrodenlöcher
8 schwenkbarer Tragarm
9 Zuleitungen
10 Transformator
11 Schienenbahn
12 Abstichposition
13 Heizposition
14 Wagen
15 heb- und senkbare Tragplattform
16 hydraulische Kolben-Zylinder-Einheit
17 Halteposition
18 Abdeckvorrichtung
19 Ofendeckel
20 Pfannendeckel
21 Haltevorrichtung
22 Einschmelzgefäß
23 flexible Prozessgas-Zuführung
24 ortsfester Ventilstand
25 Rinne
26 Pfeilrichtung

**Patentansprüche**

1. Verfahren zum Herstellen von flüssigem Stahl (1) in einem Elektrolichtbogen- oder Induktionsofen (3), in dem die Schmelze (2) behandelt, in eine Transportpfanne (4a) abgestochen, transportiert und in einer Sekundärmetallurgie die Temperatur und die Analyse der Stahlgüte zum Vergießen eingestellt werden, **dadurch gekennzeichnet, dass** eine Nutzung einer gemeinsamen Energiequelle (5) mit zugeführter Energie zum Überhitzen der Schmelze (2) in dem Elektrolichtbogen- oder Induktionsofen (3) und zur Temperatureinstellung in einem Pfannenofen (4b) vorgenommen wird, die für ein selbständige Einschmelzgefäß (22) vorgesehene Schmelzleistung L und die Fläche A des Querschnitts die Bedingung L [MW] / A [m$^2$] > 2,3 MW/m$^2$ erfüllt, das Verhältnis der im Elektrolichtbogen- oder Induktionsofen (3) angebotenen elektrischen Leistung $L_{el}$ zu der Leistung aus fossiler Energie im Einschmelzgefäß (22) die Bedingung $L_{el}$ / $L_{fossil}$ ≥ 0,18 erfüllt und das Verhältnis der Oxidationsstoffe im Elektrolichtbogen- oder Induktionsofen (3) zu den fossilen Energieträgern im Einschmelzgefäß (22) zwischen 0,6 und 1,2 eingestellt wird.

2. Verfahren nach Anspruch 1, **dadurch gekennzeichnet, dass** die elektrische Energie während des Überhitzens der Schmelze (2) bis zum Abstechen in die Transportpfanne (4a) zugeführt wird, nach dem Positionieren der Transportpfanne (4a) im Pfannenofen (4b) fortgesetzt und nach der Temperatureinstellung in der Transportpfanne (4a) und bei hinreichend hohem Füllstand (6) im Elektrolichtbogen- oder Induktionsofen (3) wieder auf den Elektrolichtbogen- oder Induktionsofen (3) zum erneuten Überhitzen umgeschaltet wird.

3. Einrichtung zum Herstellen von flüssigem Stahl (1), mit einem Elektrolichtbogen- oder Induktionsofen (3), und einer Transport- bzw. Behandlungspfanne (4; 4a), einer Schwenkeinrichtung für eine Elektrodeneinheit (7), sowie mit einem Pfannenofen (4b), **dadurch gekennzeichnet,** **dass** zwischen dem Elektrolichtbogen- oder Induktionsofen (3) und einem räumlich im Schwenkbereich der Elektrodeneinheit (7) angeordneten Pfannenofen (4b) eine abwechselnd im Elektrolichtbogen- oder Induktionsofen (3) oder im Pfannenofen (4b) nutzbare Elektrodeneinheit (7) mit einem schwenkbaren Tragarm (8), Zuleitungen (9) und einem Transformator (10) angeordnet ist, wobei eine Schienenbahn (11) zumindest zwischen der Abstichposition (12) des Elektrolichtbogen- oder Induktionsofen (3) und der Heizposition (13) des Pfannenofens (4b) verläuft.

4. Einrichtung nach Anspruch 3, **dadurch gekennzeichnet,** **dass** die Transportpfanne (4a) auf einem Wagen (14) mit heb- und senkbarer Tragplattform (15) angeordnet ist und dass die Halteposition (17) des Wagens (14) auf die ausschwenkbare Elektrodeneinheit (7) abgestimmt ist.

5. Einrichtung nach einem der Ansprüche 3 oder 4, **dadurch gekennzeichnet,** **dass** an den schwenkbaren Tragarm (8) eine Abdeckvorrichtung (18) für die Elektrodenlöcher (7b) im Ofendeckel (19) des Elektrolichtbogen- oder Induktionsofen (3) vorgesehen ist, die mit der Elektrodenbewegung synchronisierte Hub- oder Schwenkbewegungen ausführt.


**Claims**

1. Method of producing liquid steel (1) in an electric arc or induction furnace (3), in which the melt (2) is treated, tapped off into a transport ladle (4a) and transported and the temperature and analysis of the steel quality for casting are set in a secondary metallurgy, **characterised in that** use of a common energy source (5) with supplied energy for superheating the melt (2) in the electric arc or induction furnace (3) and for temperature setting in a ladle furnace (4b) is undertaken, the melting performance L provided for an independent melting-down vessel (2) and the area A of the cross-section fulfil the condition $L[MW] / A [m^2] > 2.3$ MW/m², the ratio of the electric power $L_{ei}$ supplied in the electric arc or induction furnace (3) to the power from fossil energy in the melting-down vessel (22) fulfils the condition $L_{el} / L_{fossil} \geq 0.18$ and the ratio of the oxidation materials in the electric arc or induction furnace (3) to the fossil energy carriers in the melting-down vessel (22) is set between 0.6 and 1.2.

2. Method according to claim 1, **characterised in that** the electric energy is supplied during superheating of the melt (2) until tapping-off into the transport ladle (4a), is continued after the position of the transport ladle (4a) in the ladle furnace (4b) and after temperature setting in the transport ladle (4a) and with sufficiently high filling state (6) in the electric arc or induction furnace (3) is switched back to the electric arc or induction furnace (3) for renewed superheating.

3. Equipment for producing liquid steel (1), with an electric arc or induction furnace (3), a transport or handling ladle (4; 4a), a pivot device for an electrode unit (7) and a ladle furnace (4b), **characterised in that** arranged between the electric arc or induction furnace (3) and a ladle furnace (4b) physically arranged in the pivot region of the electrode unit (7) is an electrode unit (7), which is alternately usable in the electric arc or induction furnace (3) or in the ladle furnace (4b), with a pivotable support arm (8), feeds (9) and a transformer (10), wherein a rail track (11) runs at least between the tapping position (12) of the electric arc or induction furnace (3) and the heating position (13) of the ladle furnace (14).

4. Equipment according to claim 3, **characterised in that** the transport ladle (4a) is arranged on a carriage (14) with raisable and lowerable support platform (15) and that the stopping position (17) of the carriage (14) is matched to the electrode unit (7), which can be pivoted out.

5. Equipment according to one of claims 3 and 4, **characterised in that** provided at the pivotable support arm (8) is a cover device (18), which executes stroke or pivot movements synchronised with the electrode movement, for the electrode holes (7b) in the furnace cover (19) of the electric arc or induction furnace (3).


**Revendications**

1. Procédé destiné à la fabrication d'acier liquide (1) dans un four à arc électrique ou four à induction (3), dans lequel la fonte (2) est traitée, coulée dans une poche de transfert (4a) et transportée, et dans lequel la température et l'analyse des produits en acier à couler sont ajustées au moyen d'une métallurgie secondaire,
**caractérisé en ce que**
il est prévu l'utilisation d'une source d'énergie commune (5), avec une énergie alimentée pour la surchauffe de la fonte (2) dans un four à arc électrique ou four à induction (3), et pour le réglage de la température dans un four-poche (4b),
permettant de remplir la condition L [MW] / A [m$^2$] > 2,3 MW/m$^2$, pour une capacité de fusion L relative à une cuve de fusion indépendante (22) et pour la surface A de la section transversale,
le rapport entre la puissance électrique L$_{ei}$ fournie dans le four à arc électrique ou four à induction (3) et la puissance issue de l'énergie fossile dans la cuve de fusion (22) remplit la condition L$_{ei}$ / L$_{fossile}$ ≥ 0,18, et
le rapport entre les agents d'oxydation dans le four à arc électrique ou four à induction (3) et les vecteurs d'énergie dans la cuve de fusion (22) est ajusté entre 0,6 et 1,2.

2. Procédé selon la revendication 1,
**caractérisé en ce que**
l'énergie électrique est alimentée pendant la surchauffe de la fonte (2), jusqu'à la coulée dans la poche de transfert (4a), puis poursuivie dans le four-poche (4b) après le positionnement dans la poche de transfert (4a), et ensuite basculée à nouveau sur le four à arc électrique ou four à induction (3) pour une nouvelle surchauffe, après le réglage de la température dans la poche de transfert (4a) et lorsque le niveau de remplissage (6) est suffisant dans le four à arc électrique ou four à induction (3).

3. Dispositif destiné à la fabrication d'acier liquide (1), avec un four à arc électrique ou four à induction (3), une poche de traitement ou de transfert (4, 4a), un dispositif de pivotement pour une unité d'électrode (7) et un four-poche (4b),
**caractérisé en ce que**
une unité d'électrode (7) avec un bras porteur pivotant (8), des conduites (9) et un transformateur (10), pouvant être utilisée alternativement dans le four à arc électrique ou four à induction (3) ou dans le four-poche (4b), est installée entre le four à arc électrique ou four à induction (3) et un four-poche (4b) situé dans la zone de pivotement de l'unité d'électrode (7), une voie à rails (11) s'étendant au moins entre la position de coulée (12) du four à arc électrique ou four à induction (3) et la position de chauffe (13) du four-poche (4b).

4. Dispositif selon la revendication 3,
**caractérisé en ce que**
la poche de transfert (4a) est installée sur un chariot (14) avec une plateforme porteuse (15) apte à être levée et abaissée, et **en ce que** la position de maintien (17) du chariot (14) est adaptée à l'unité d'électrode pivotante (7).

5. Dispositif selon l'une des revendications 3 ou 4,
**caractérisé en ce que**
un dispositif de recouvrement (18) destiné aux orifices d'électrode (7b) dans le couvercle de four (19) du four à arc électrique ou four à induction (3) est prévu sur le bras porteur pivotant (8), permettant d'exécuter des mouvements de pivotement ou de translation synchronisés avec le mouvement de l'électrode.

FIG. 1

FIG. 2

**FIG. 3A**

**Fig. 3B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10205660 A1

**In der Beschreibung aufgeführte Nicht-Patentliteratur**

- TAILORED SOLUTIONS FOR THE PRODUCTION OF QUALITY STEEL. **LEMKE S et al.** MPT. METALLURGICAL PLANT AND PLANT AND TECHNOLOGY INTERNATIONAL. VERLAG STAHLEISEN, August 2001, 72-7476, 78, 80, 82, 84, 86